# EUROPÄISCHE PATENTANMELDUNG

(11) **EP 2 163 801 A1**
(43) Veröffentlichungstag der Anmeldung: **17.03.2010**
(21) Anmeldenummer: 09168980.2
(22) Anmeldetag: 28.08.2009
(51) Int. Cl.: F16L 33/08

(54) **Schellenfixierung**

(30) Priorität: 11.09.2008 DE 102008046893
(71) Anmelder: VERITAS AG, 63571 Gelnhausen (DE)
(72) Erfinder: Cöl, Isa, 60385, Frankfurt (DE)
(74) Vertreter: Schickedanz, Willi

(57) **Zusammenfassung**

Die Erfindung betrifft eine Schellenfixierung (1) für ein Schlauchende eines Schlauchs mit mindestens einem Halteelement (3 - 5), wobei das Halteelement (3 - 5) eine Auflagefläche (32, 70) für eine Schlauchschelle (2) sowie eine Platte (18, 19) aufweist. Senkrecht zu dieser Platte (18, 19) ist mindestens ein Eingreifelement (12 - 17) angeordnet, das in Richtung des Schlauchs weist. An der Auflagefläche ist ein erstes Paar benachbarter Schenkel (20 - 25) angeordnet, die sich gegenüber von einem zweiten Paar sich gegenüberliegender Schenkel (26 - 31) befinden. Die Schenkel (20 - 25; 26 - 31) stehen dabei senkrecht auf der Auflagefläche (32, 70) des Halteelements (3 - 5) und weisen in Richtung der Schlauchschelle (2). Sowohl das erste als auch das zweite Paar an Schenkeln (20 - 25; 26 - 31) weist jeweils einen Abschnitt auf, der oberhalb der Schlauchschelle (2) angeordnet werden kann.

## Beschreibung

Die Erfindung betrifft eine Schellenfixierung nach dem Oberbegriff des Patentanspruchs 1.

Schlauchschellen dienen als Haltevorrichtungen für Schlauchenden, die auf dem Umfang eines Schlauches angebracht werden, um das Schlauchende mit einem Rohrstutzen zu verbinden, über den der Schlauch zuvor gestülpt worden ist. Damit sich die Schlauchschellen nicht von dem Schlauchende lösen, werden häufig zusätzliche Halteelemente an der Schlauchschelle angebracht.

Bekannt ist eine Haltevorrichtung für ein Schlauchende, das eine Schlauchschelle enthält, die an wenigstens einer Stelle einen quer zum Umfang des Schlauchendes verlaufenden Verklemmungsteil aufweist, der in die Innenseite des Schlauchendes eingreift (DE 103 24 236 A1).

Weiterhin ist eine Schellenfixierung bekannt, bei der eine Schelle mit einem Halteelement verbunden ist (US 3 454 996; US 3 477 106). Das Haltelement ist mit der Unterseite der Schelle verbunden und weist Eingreifelemente auf, mit denen das Halteelement mit einem Schlauchende eines Schlauchs verbindbar ist, so dass die Schelle an einem bestimmten Ort des Schlauchs fest angeordnet werden kann.

Aufgabe der vorliegenden Erfindung ist es, eine Schellenfixierung für eine Schlauchschelle bereitzustellen, welche derart ausgebildet ist, dass ein Verrutschen der an einem Schlauch angeordneten Schlauchschelle nicht möglich ist.

Diese Aufgabe wird durch die Merkmale des Anspruchs 1 gelöst.

Die Erfindung betrifft eine Schellenfixierung für ein Schlauchende mit mindestens einem Halteelement, wobei das Halteelement eine Auflagefläche für eine Schlauchschelle sowie eine Platte aufweist. Senkrecht zu dieser Platte ist mindestens ein Eingreifelement angeordnet, das in Richtung des Schlauchs weist. An der Auflagefläche ist ein erstes Paar benachbarter Schenkel angeordnet, die sich gegenüber von einem zweiten Paar sich gegenüberliegender Schenkel befinden. Die Schenkel stehen dabei senkrecht auf der Auflagefläche des Halteelements und weisen in Richtung der Schlauchschelle. Sowohl das erste als auch das zweite Paar an Schenkeln weist jeweils einen Abschnitt auf, der oberhalb der Schlauchschelle angeordnet werden kann.

Durch das Anbringen dieser Schellenfixierung entfällt ein Aufweiten eines Schlauchendes des Schlauchs, womit eine hohe Formgenauigkeit des Schlauchs erhalten wird. Ein Aufbringen des Schlauchs auf einen Stutzen, zum Beispiel einen Anschlussstutzen, gestaltet sich somit sehr einfach. Durch diese Schellenfixierung können deshalb Kosten reduziert werden, da das Aufweiten des Schlauchendes entfällt.

Durch das Verfahren zum Anbringen der Schellenfixierung kann die Schlauchschelle ferner in einer ganz bestimmten Schlossposition auf einem Schlauch angeordnet werden. Auch kann die axiale Position der Schlauchschelle exakt vorbestimmt werden. Es wird so eine auf dem Schlauch angeordnete Schellenfixierung erhalten, die fest auf dem Schlauch angeordnet und nur schwer vom Schlauch zu entfernen ist.

Ausführungsbeispiele der Erfindung sind in den Zeichnungen dargestellt und im Folgenden näher beschrieben. Es zeigen:
- Figur 1: eine Schellenfixierung ohne Schlauch;
- Figur 2: ein Halteelement der in Figur 1 dargestellten Schellenfixierung ohne Schlauchschelle;
- Figur 3: eine zweite Variante eines Halteelements;
- Figur 4: eine dritte Variante eines Halteelements;
- Figur 5: eine vierte Variante eines Halteelements;
- Figur 6a bis 6e: ein Verfahren zum Anbringen der Schellenfixierung gemäß Figur 1;
- Figur 7: die an einem Schlauch angebrachte Schellenfixierung gemäß Figur 6e nach Entfernen eines Schlauchendes;
- Figur 8: einen Schnitt durch einen Teil der am Schlauch angeordneten Schellenfixierung nach Figur 6e;
- Figur 9: eine perspektivische Ansicht eines Fügewerkzeuges;
- Figur 10: eine Seitenansicht eines Ausschnitts des in Figur 9 darge-stellten Fügewerkzeuges.

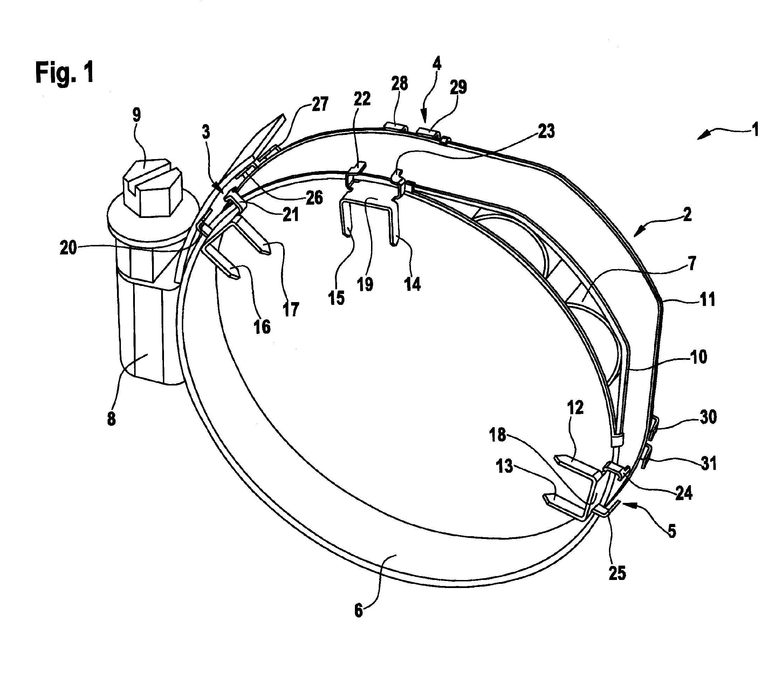

In Fig. 1 ist eine Schellenfixierung 1, bestehend aus einer Schlauchschelle 2 sowie Halteelementen 3 bis 5, dargestellt. Die Schlauchschelle 2 ist ein gekrümmtes Band 6 mit integrierter Federeinlage 7. Die Schlauchschelle 2 weist ein Schraubengehäuse 8 mit einer Schraube 9 auf. Mit dieser Schraube 9 kann der Umfang des Bands 6 verändert werden. Zu erkennen sind auch Erhebungen 10 und 11, die im Randbereich des Bands 6 angeordnet sind. Die Schellenfixierung 1 besteht dabei vorzugsweise aus einem korrosionsbeständigen Material, zum Beispiel Edelstahl.

Die Halteelemente 3 bis 5 weisen an einem ihrer Enden jeweils zwei Eingreifelemente 12 bis 17 auf, die einander gegenüberliegen. Diese Eingreifelemente 12 bis 17 sind senkrecht auf einer Platte des jeweiligen Halteelements 3 bis 5 angeordnet. In Figur 1 sind jedoch nur die Platten 18 und 19 zu erkennen. An diese Platten 18, 19 schließt sich eine Auflagefläche an, auf der die Schlauchschelle 2 aufliegt. Eine Auflagefläche ist jedoch in Figur 1 nicht zu erkennen. Wie in Fig. 1 zu sehen, laufen diese Eingreifelemente 12 bis 17 an ihrem Ende spitz zu. Es ist aber auch möglich, dass die Eingreifelemente 12 bis 17 an ihren Enden nicht spitz zulaufen, sondern dass diese Enden scharfe Kanten aufweisen. Obwohl die Halteelemente 3 bis 5 in Fig. 1 jeweils zwei Eingreifelemente 12 bis 17 aufweisen, kann ein Halteelement auch nur über ein Eingreifelement oder aber über mehr als zwei Eingreifelemente verfügen.

Die Halteelemente 3 bis 5 weisen ferner jeweils zwei gegenüberliegende Schenkel 20 bis 25 auf, die neben den beiden Eingreifelementen 12 bis 17 eines jeden Halteelements 3 bis 5 angeordnet sind. Diese Schenkel 20 bis 25 sind ebenfalls senkrecht auf den Platten 18, 19 angeordnet. Allerdings weisen die Schenkel 20 bis 25 in die entgegengesetzte Richtung wie die Eingreifelemente 12 bis 17. Die Schenkel 20 bis 25 sind dabei im Wesentlichen U-förmig gebogen und überdecken die Schlauchschelle 2 zumindest teilweise. Zu erkennen ist auch, dass jedes der Halteelemente 3 bis 5 zwei weitere Schenkel 26 bis 31 aufweist. Diese Schenkel 26 bis 31 sind ebenfalls gebogen und umgeben die Schlauchschelle 2 zumindest teilweise.

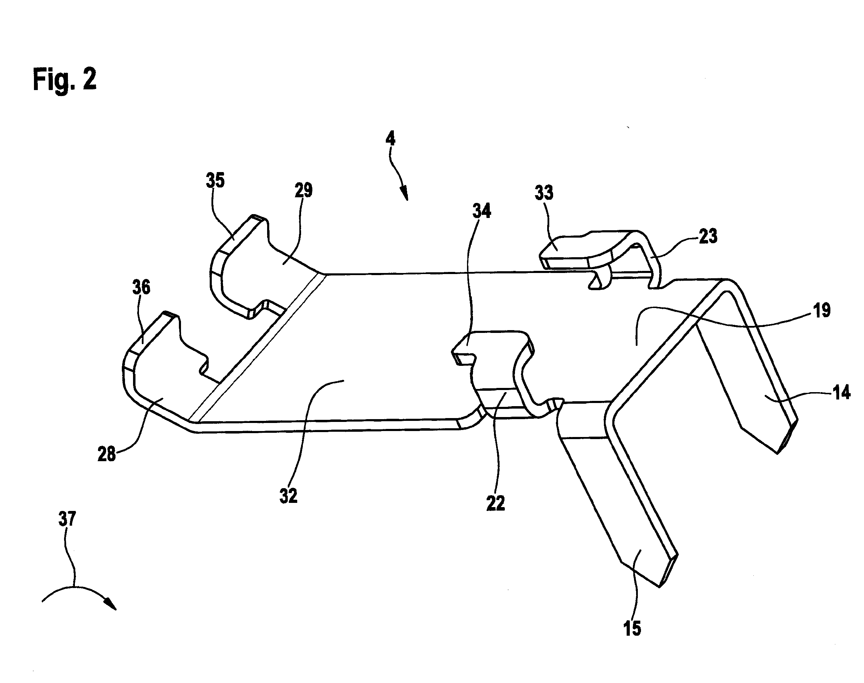

Figur 2 zeigt ein Halteelement 4 der in Figur 1 dargestellten Schellenfixierung ohne Schlauchschelle. Die Platte 19, an der die Eingreifelemente 14 und 15 angeordnet sind, schließt sich an eine Auflagefläche 32 an. Dabei sind die Eingreifelemente 14, 15 senkrecht an der Platte 19 angeordnet. Auf dieser Auflagefläche 32 liegt die in Figur 1 nicht abgebildete Schlauchschelle auf. Zwischen der Platte 19 und der Auflagefläche 32 für eine Schlauchschelle sind jeweils zwei gegenüberliegende, im Wesentlichen U-förmig geformte Schenkel 22 und 23 angeordnet. Ein jeder dieser Schenkel 22, 23 weist einen Abschnitt 33, 34 auf, der die Auflagefläche 32 zumindest teilweise überdeckt. Die Auflagefläche 32 und die Abschnitte 33, 34 sind dabei im Wesentlichen parallel zueinander angeordnet. Die Abschnitte 33, 34 und die Auflagefläche 32 sind jeweils derart voneinander beabstandet, dass zwischen diesen Abschnitten 33, 34 und der Auflagefläche 32 eine Schlauchschelle angeordnet werden kann. Dies ist jedoch in Figur 2 nicht dargestellt.

Zu erkennen sind ferner die beiden Schenkel 28, 29, die ebenfalls im Wesentlichen U-förmig ausgebildet sind. Die beiden Schenkel 28, 29 weisen ebenfalls jeweils einen Abschnitt 35, 36 auf. Diese Abschnitte 35, 36 sind jeweils oberhalb der Auflagefläche 32 angeordnet, so dass diese beiden Abschnitte 35, 36 die Auflagefläche 32 zumindest teilweise überdecken. Dazu müssen jedoch die beiden Schenkel 28 und 29 gebogen werden, das heißt in Richtung eines Pfeils 37 bewegt werden. Dies geschieht jedoch erst, wenn eine Schlauchschelle auf der Auflagefläche 32 angeordnet wurde. In Figur 2 ist somit das Halteelement 4 in einem Stadium gezeigt, bevor eine Schlauchschelle auf diesem Halteelement 4 angeordnet ist. Sobald die Abschnitte 33 bis 36 der Schenkel 22, 23, 28, 29 oberhalb der auf der Auflagefläche 32 aufliegenden Schlauchschelle angeordnet sind, ist die Schlauchschelle fest auf der Auflagefläche 32 des Halteelements 4 angeordnet.

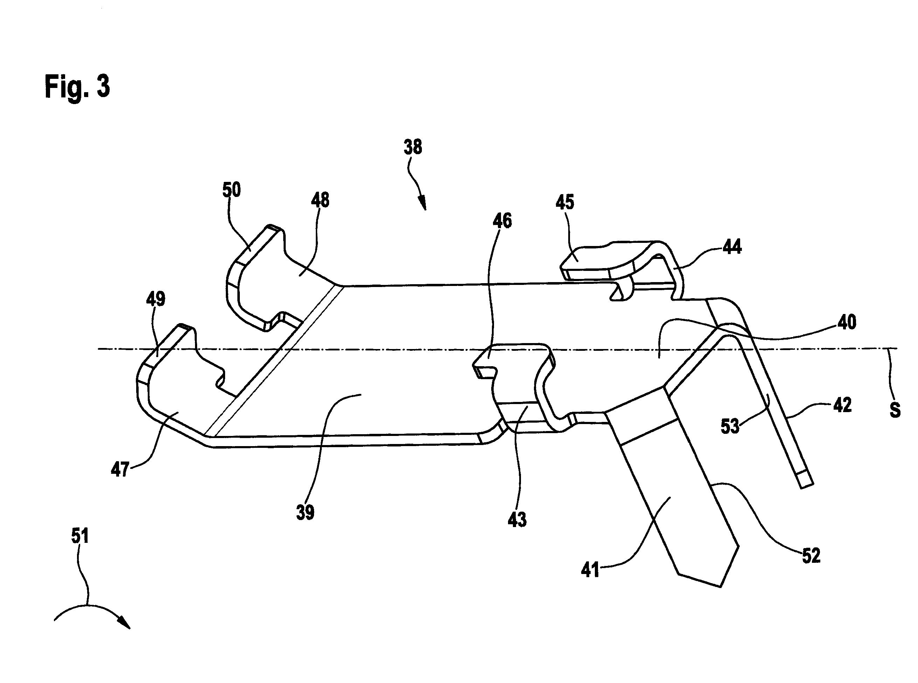

In Figur 3 ist eine zweite Variante eines Halteelements 38 des in Figur 2 dargestellten Halteelements 4 dargestellt. Zu erkennen ist wiederum eine Auflagefläche 39, die mit einer Platte 40 verbunden ist. An dieser Platte 40 sind zwei Eingreifelemente 41, 42 angeordnet. Diese Eingreifelemente 41 und 42 sind senkrecht auf der Platte 40 angeordnet und verlaufen in Richtung eines in Figur 3 nicht dargestellten Schlauchs. Zwischen der Platte 40 und der Auflagefläche 39 sind zwei einander gegenüberliegende, im Wesentlichen U-förmige Schenkel 43 und 44 angeordnet. Auch diese Schenkel 43, 44 weisen Abschnitte 45, 46 auf, die die Auflagefläche 39 zumindest teilweise überdecken und parallel zu dieser Auflagefläche 39 angeordnet sind. Auch die Abschnitte 45 und 46 sind derart von der Auflagefläche 39 beabstandet, dass zwischen den Abschnitten 45, 46 und der Auflagefläche 39 eine in Figur 3 nicht dargestellte Schelle angeordnet werden kann.

An der Auflagefläche 39 sind ferner zwei im Wesentlichen U-förmige Schenkel 47, 48 angeordnet, die jeweils einen Abschnitt 49, 50 aufweisen. Jedoch sind diese Abschnitte 49, 50 noch nicht parallel zur Auflagefläche 39 des Halteelements 38 angeordnet, so dass auch in Figur 3 ein Halteelement in einem Stadium dargestellt ist, bevor auf dieser Auflagefläche 39 eine Schlauchschelle angeordnet wird. Die beiden Schenkel 47, 48 sind deshalb noch nicht in Richtung eines Pfeils 51 bewegt worden. Das Halteelement 38 unterscheidet sich somit von dem Halteelements 4 nur durch die unterschiedliche Anordnung der beiden Eingreifelemente 41, 42. So sind die beiden Eingreifelemente 41, 42 mit ihren beiden Seiten 52, 53 in Richtung einer Symmetrieachse S bewegt worden, so dass diese beiden Seiten 52, 53 der Eingreifelemente 41, 42 nun einander zugewandt sind.

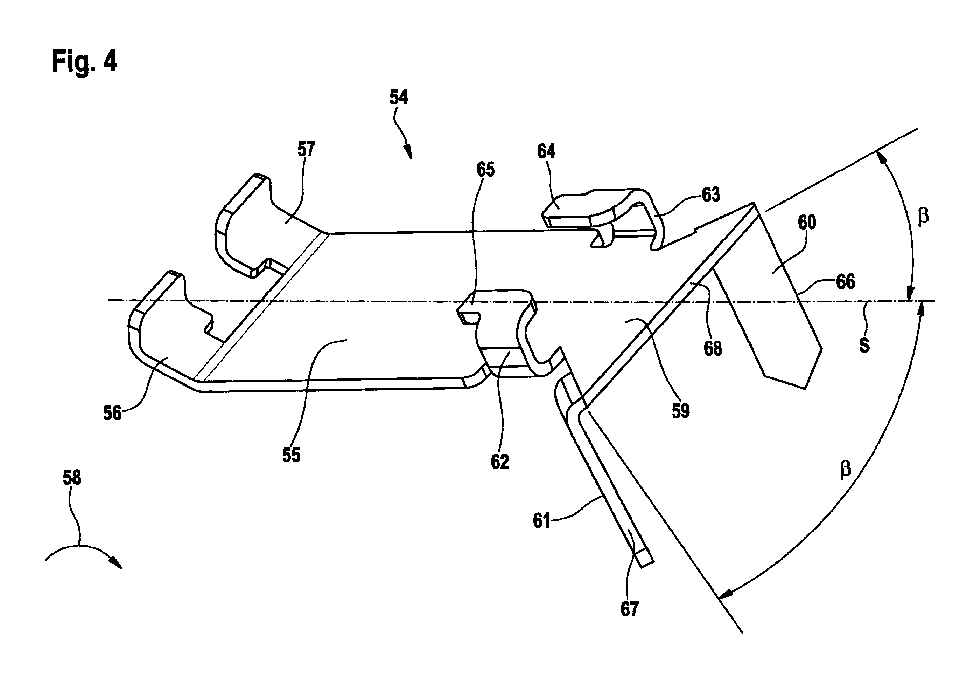

In Figur 4 ist eine weitere Variante eines Halteelements 54 dargestellt. Das Halteelements 54 weist eine Auflagefläche 55 mit zwei daran angeordneten Schenkeln 56, 57 auf. Da die Schenkel 56, 57 noch nicht in Richtung eines Pfeils 58 bewegt worden sind, ist in Figur 4 somit das Halteelement 54 vor dem Anbringen einer Schlauchschelle dargestellt. Das Halteelement 54 weist eine Platte 59 auf, an der zwei Eingreifelemente 60, 61 angeordnet sind. Zwischen der Platte 59 und der Auflagefläche 55 für eine Schlauchschelle sind zwei im Wesentlichen U-förmige Schenkel 62, 63 zu erkennen, die jeweils einen Abschnitt 64, 65 aufweisen. Diese Abschnitte 64, 65 sind im Wesentlichen parallel zur Auflagefläche 55 angeordnet. Zu erkennen ist, dass die Eingreifelemente 60, 61 Seiten 66, 67 aufweisen, die einander abgewandt sind, wodurch die Kantenlänge der Seite 68 der Platte 59 gegenüber der Platte 19 des Halteelements 4 verlängert ist. Die Eingreifelemente 60, 61 sind wiederum senkrecht zu der Platte 59 angeordnet und weisen in Richtung eines in Figur 4 nicht dargestellten Schlauchs. Vorteilhaft ist somit, dass die Eingreifelemente eines Halteelements senkrecht zu der jeweiligen Platte angeordnet sind. In Bezug auf die Symmetrieachse S weisen das Eingreifelement 60 beziehungsweise das Eingreifelement 61 einen Winkel □ von 235° auf.

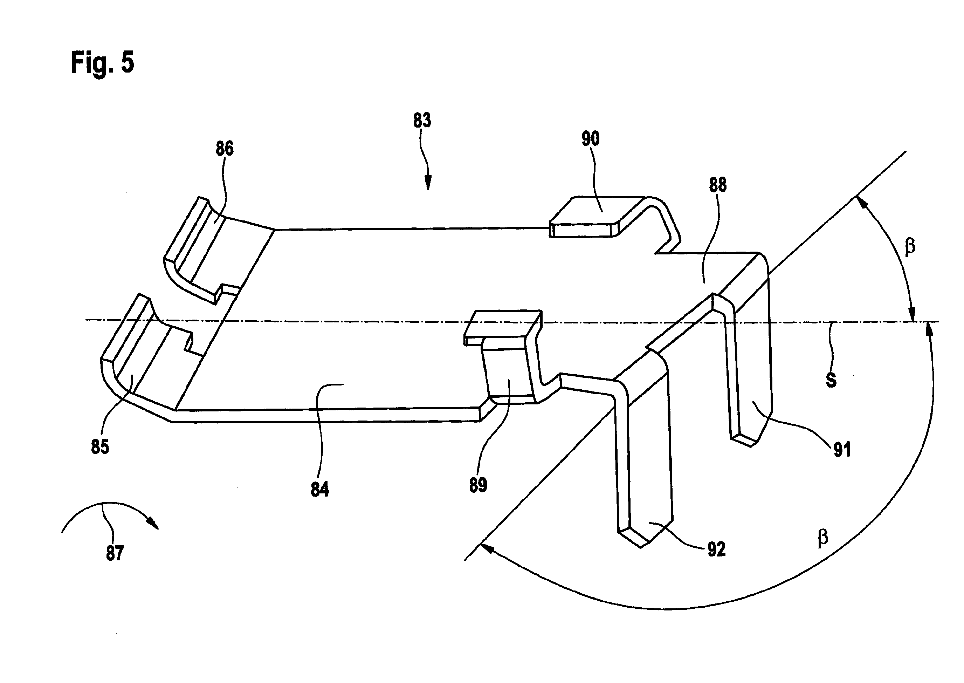

In Figur 5 ist eine weitere Variante eines Halteelements 83 dargestellt. Dieses Halteelement 83 weist wiederum eine Auflagefläche 84 mit zwei daran angeordneten Schenkeln 85, 86 auf, die in Richtung des Pfeils 87 bewegt werden können. Zwischen einer Platte 88 und der Auflagefläche 84 sind zwei einander gegenüberliegende Schenkel 89, 90 angeordnet. Dabei bilden die Schenkel 85 und 89 sowie die Schenkel 86 und 90 Führungsabschnitte. Zwei Eingreifelemente 91, 92 sind an einer Platte 88 in einem Winkel □ von 90° in Bezug auf die Symmetrieachse S angeordnet. Die Eingreifelemente 12 bis 17; 41, 42; 60, 61 sowie 91, 92 sind somit gemäß den Figuren 2 bis 5 in einem Winkel von 90° bis 235° gemessen von der Symmetrieachse S angeordnet. Die Anordnung dieser Eingreifelemente in einem anderen Winkel zu dieser Symmetrieachse S ist zwar in den Figuren nicht dargestellt, aber prinzipiell denkbar.

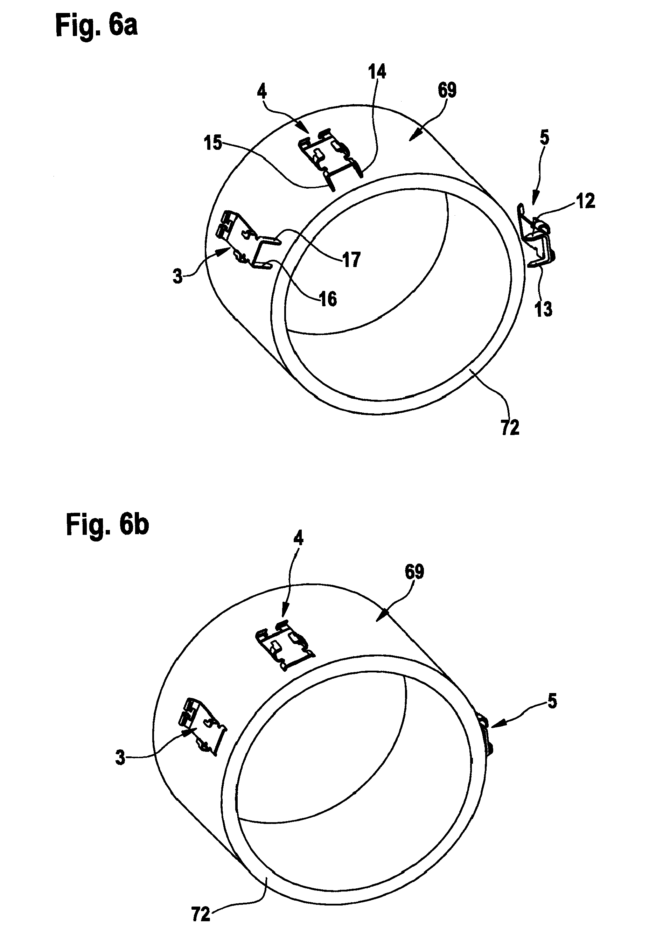

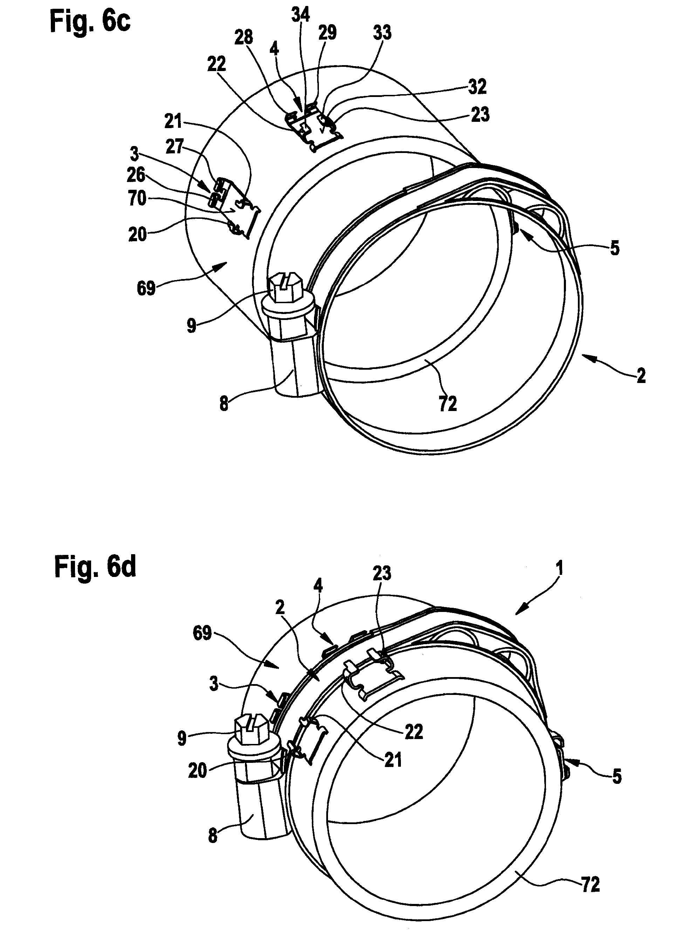

In den Figuren 6a bis 6e ist ein Verfahren zum Anbringen der Schellenfixierung 1 gemäß Figur 1 an einem Ende 72 eines Schlauchs 69 dargestellt. In einem ersten Schritt werden die Halteelemente 3 bis 5 an dem bereitgestellten Schlauch 69 angeordnet, indem die Eingreifelemente 12 bis 17 der Halteelemente 3 bis 5 in den Schlauch 69 eingebracht werden (vergleiche Figur 6a). In Figur 6b sind die Halteelemente 3 bis 5 bereits an dem Schlauch 69 angeordnet. Nachdem diese Halteelemente 3 bis 5 an dem Schlauch 69 angeordnet wurden, werden die in dem Schlauch 69 sitzenden Eingreifelemente 12 bis 17 gebogen, womit die Halteelemente 3 bis 5 fest auf dem Schlauch 69 fixiert sind. Das Biegen der Eingreifelemente 12 bis 17 erfolgt mittels eines Fügewerkzeugs, das in den Figuren 6a bis 6e nicht dargestellt ist. Anschließend wird die Schlauchschelle 2 über den Schlauch 69 gebracht und auf die Auflageflächen der Halteelemente 3 bis 5 gelegt (vergleiche Figur 6c). In Figur 6c sind jedoch nur die Auflageflächen 70, 32 der Halteelemente 3 und 4 zu erkennen.

In Figur 6c ist zu sehen, dass die Schlauchschelle 2 einen Durchmesser aufweist, der nur geringfügig größer ist als der Durchmesser des Schlauchendes 72. Dies liegt daran, dass die Schlauchschelle 2 nur wenig aufgeweitet werden muss, um auf den Halteelementen 3 bis 5 angeordnet zu werden. Vorteilhaft ist dabei die Position der Schenkel 20, 26 sowie 21, 27 des Halteelements 3 beziehungsweise der Schenkel 22, 28 sowie 23, 29 des Halteelements 4 zueinander. Diese sich gegenüberliegenden Schenkel bilden jeweils einen Führungsabschnitt 20, 26; 21, 27; 22, 28; 23, 29; 85, 89; 86, 90. In diesen Führungsabschnitten 20, 26; 21, 27; 22, 28; 23, 29; 85, 89; 86, 90 kann die Schlauchschelle 2 angeordnet werden. Durch den definierten Abstand der Auflageflächen zu den Abschnitten 33, 34 kann die Schlauchschelle 2 mit einem relativ geringen Montagedurchmesser aufgesetzt werden. Der Montagedurchmesser muss nur wenig größer als der Durchmesser des Schlauchendes 72 sein. Auflageflächen für die Schlauchschelle sind in Figur 6c jedoch nicht zu erkennen.

Das Verfahren zum Anbringen der Schlauchschelle 2 auf dem Schlauch 69 gestaltet sich somit einfach. Wird die Schlauchschelle 2 in einem Motorraum eines Fahrzeugs auf einen Schlauch aufgebracht, so ist dies trotz der engen Platzverhältnisse problemlos möglich.

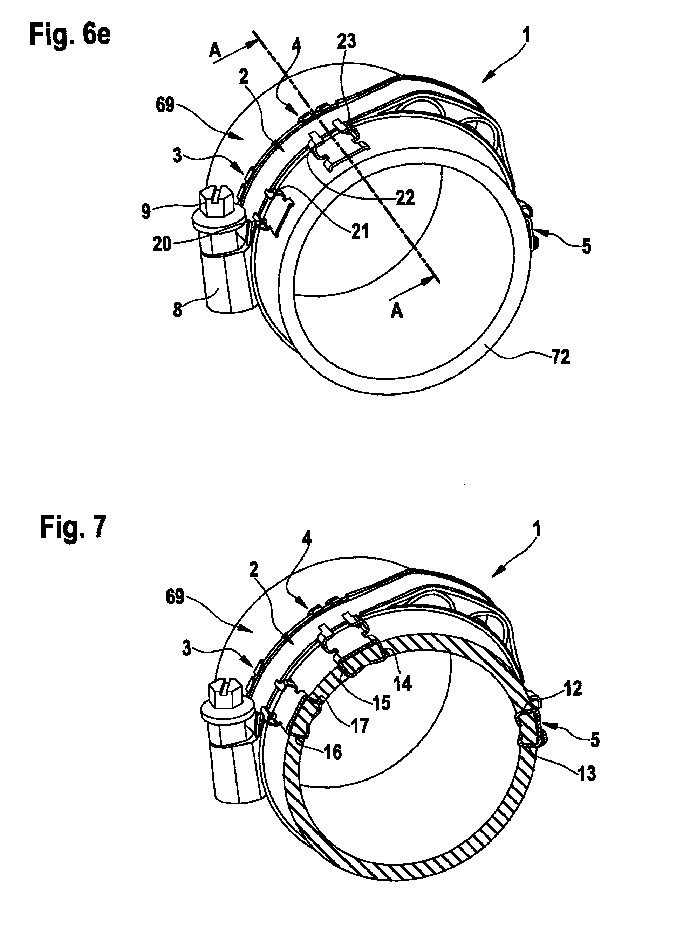

In Figur 6d ist zu erkennen, wie die Schlauchschelle 2 auf den Halteelementen 3 bis 5 aufliegt. Die Abschnitte der Schenkel sind allerdings noch nicht oberhalb der Schlauchschelle 2 angeordnet. In Figur 6c sind nur die Schenkel 20 bis 23 der Halteelemente 3 und 4 zu sehen. Nach Festziehen der Schraube 9 der Schlauchschelle 2 können die Schenkel 20 bis 23 in Richtung der Schlauchschelle 2 bewegt werden, so dass die Abschnitte der Schenkel 20 bis 23 oberhalb der Schlauchschelle 2 angeordnet sind. Dieser Zustand ist in Figur 6e dargestellt. Das Biegen der Schenkel erfolgt mittels eines Fügewerkzeuges. Ein solches Fügewerkzeug ist jedoch in Figur 6e nicht dargestellt. In Figur 6e liegen die Schenkel 20 bis 23 an der Schlauchschelle 2 an. Dabei sind die Abschnitte der Schenkel 20 bis 23 oberhalb der Schlauchschelle 2 angeordnet.

Ein weiterer Vorteil dieser Erfindung besteht darin, dass beim Anordnen der Schlauchschelle 2 auf den Auflageflächen der Halteelemente 3 bis 5 nur eine geringe Reibung erzeugt wird. Dies liegt an der Anordnung der Schenkel der Halteelemente 3 bis 5. Durch die Schenkel dieser Halteelemente 3 bis 5 kann die Schlauchschelle 2 genau geführt werden. Sollte die Schraube 9 der Schlauchschelle 2 mit einem bestimmten Drehmoment angezogen werden, so wird durch die Anordnung dieser Schenkel verhindert, dass die Schlauchschelle 2 verkantet. Die Halteelemente 3 bis 5 haben somit nicht nur den Vorteil, dass die Schlauchschelle 2 fest auf dem Schlauch 69 angeordnet ist, sondern auch den Vorteil, dass ein Verkanten der Schlauchschelle 2 verhindert wird. Ein Verkanten hätte nämlich zur Folge, dass ein elektronischer Schrauber bei einem voreingestellten Drehmoment zwar abschaltet, die Schlauchschelle 2 jedoch noch nicht vollständig geschlossen ist. Sollte ein Schlauch mit einer verkanteten Schlauchschelle auf einem Schlauchstutzen aufgebracht worden sein, hat dies zur Folge, dass sich der Schlauch sehr leicht von dem Stutzen löst.

In Figur 7 ist der in Figur 6e dargestellte Zustand zu sehen. Dabei ist jedoch das Schlauchende 72 des Schlauchs 69 abgetrennt, so dass die Eingreifelemente 12 bis 17 der Halteelemente 3 bis 5 zu erkennen sind. Die spitzen Enden der Eingreifelemente 12 bis 17 sind dabei einander zugewandt. Dieser Zustand wird dadurch erreicht, dass die Enden der Eingreifelemente 12 bis 17 durch ein Fügewerkzeug gebogen werden. Ein solches Fügewerkzeug ist in Figur 6 der Übersicht halber nicht dargestellt. Dadurch, dass die Enden der Eingreifelemente 12 bis 17 einander zugewandt sind, sind die Halteelemente 3 bis 5 fest an dem Schlauch 69 angeordnet. Ein Verrutschen der Halteelemente 3 bis 5 ist damit nicht mehr möglich. Auch kann sich ein Benutzer an diesen spitzen Enden nicht mehr verletzen, da die spitzen Enden der Eingreifelemente 12 bis 17 nicht mehr aus dem Schlauch 69 herausragen. Dieser Prozess des Biegens der spitzen Enden der Eingreifelemente 12 bis 17 wird auch als "Crimpen" bezeichnet.

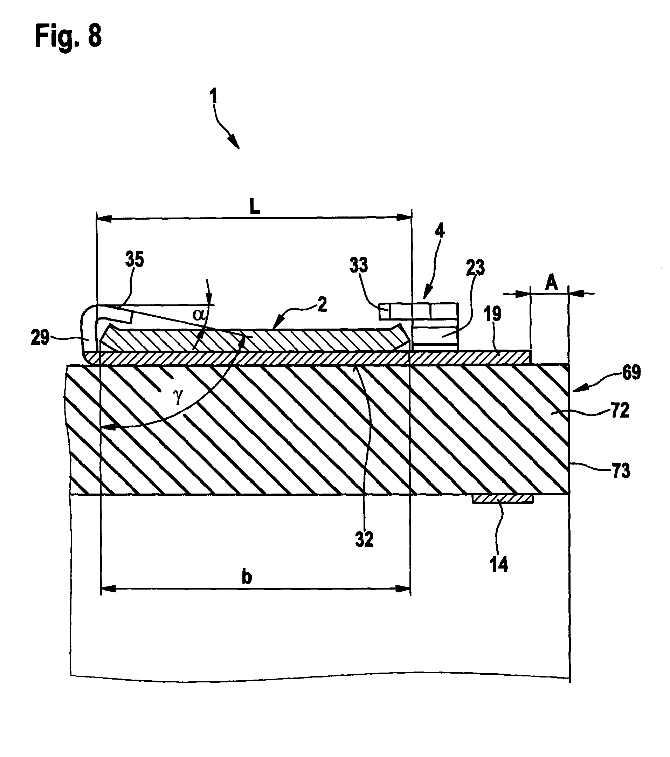

In Figur 8 ist ein Schnitt A-A durch einen Teil der an dem Schlauch 69 angeordneten Schellenfixierung 1 gemäß Figur 6e gezeigt. Zu erkennen ist das Halteelement 4, das mit seiner Auflagefläche 32 und der Platte 19 auf dem Schlauch 69 aufliegt. Auf der Auflagefläche 32 liegt die Schlauchschelle 2 auf. Die Schlauchschelle 2 wird an ihren Seiten von dem Schenkel 23 beziehungsweise dem Schenkel 29 umgeben. Der Abschnitt 35 des Schenkels 29 sowie der Abschnitt 33 des Schenkels 23 überdecken die Schlauchschelle 2 zumindest teilweise. Dabei kann der Abschnitt 35 des Schenkels 29 parallel zu der Schlauchschelle 2 angeordnet sein oder, wie dies in Figur 8 der Fall ist, etwas in Richtung der Schlauchschelle 2 gebogen sein. Somit verläuft der Abschnitt 35 nicht parallel zu der Schlauchschelle 2, sondern ist mit einem Winkel □ in Richtung der Schlauchschelle 2 gebogen. Der Winkel □, das heißt der Winkel zwischen dem Schenkel 29 und dem Abschnitt 35, beträgt in diesem Fall 90° - □, das heißt □□ 90°.

Vorteilhaft ist dabei, wenn die beiden Schenkel 29 und 23 einen Abstand der Länge L aufweisen, der nur geringfügig größer ist als die Breite b der Schlauchschelle 2. Der Abstand A zwischen der Platte 19 und dem Ende 73 des Schlauchendes 72 beträgt maximal einige wenige Millimeter.

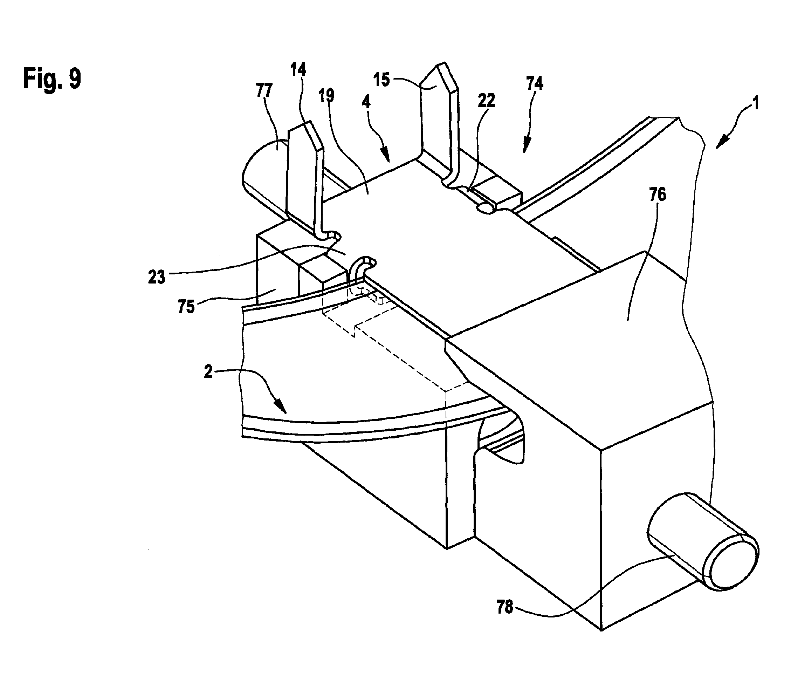

In Figur 9 ist eine perspektivische Ansicht eines Fügewerkzeuges 74 dargestellt, mit dem Enden von Eingreifelementen gebogen werden können. Das Fügewerkzeug 74 besteht aus zwei Backen 75, 76, die jeweils ein Gewinde 77, 78 aufweisen. Diese beiden Backen 75, 76 können über ihre Gewinde 77, 78 in ein Fügewerkzeug eingebracht werden. Ein Fügewerkzeug ist in Figur 9 jedoch nicht dargestellt. Auf der Backe 75 liegt die Schlauchschelle 2 mit dem daran angeordneten Halteelement 4 auf. Schlauchschelle 2 und Halteelement 4 bilden somit einen Teil der Schellenfixierung 1. Die Schellenfixierung 1 liegt auf einem hier nicht dargestellten Schlauch auf. Zu erkennen sind die Eingreifelemente 14, 15 des Halteelements 4, die senkrecht auf der Platte 19 angeordnet sind.

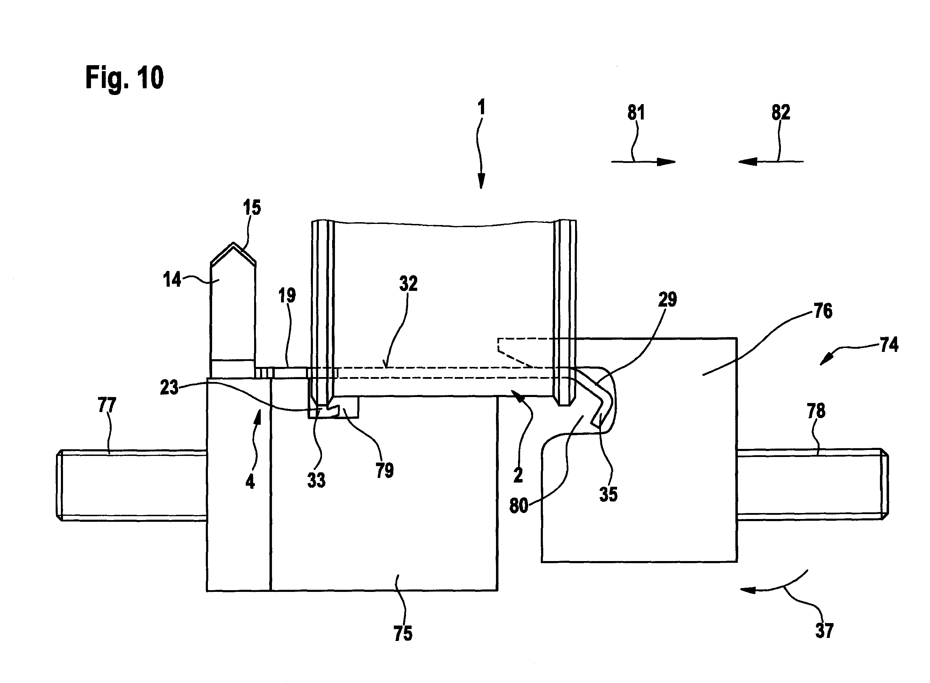

In Figur 10 ist eine Seitenansicht des in Figur 9 dargestellten Fügewerkzeuges 74 dargestellt. Zu erkennen sind die beiden Backen 75, 76, auf der die Schellenfixierung 1 angeordnet ist. Der Schlauch ist auch in Figur 10 der Übersicht halber nicht dargestellt. Zu erkennen sind wiederum die beiden Eingreifelemente 14, 15, die senkrecht auf der Platte 19 angeordnet sind. Dargestellt ist ferner der Schenkel 23, der in einer Einkerbung 79 der Backe 75 eingebracht ist, wodurch der Abschnitt 33 des Schenkels 23 ebenfalls in der Einkerbung 79 angeordnet ist. Während die Platte 19 des Halteelements 4 direkt auf der Backe 75 angeordnet ist, steht die Auflagefläche 32 nicht direkt mit der Backe 75 in Kontakt. Da die Auflagefläche 32 von der Schlauchschelle 2 überdeckt ist, ist die Auflagefläche 32 nur schematisch dargestellt. Zwischen der Auflagefläche 32 und der Backe 75 ist die Schlauchschelle 2 angeordnet, so dass hier die Schlauchschelle 2 direkt auf der Backe 75 aufliegt. Der Schenkel 29 mit dem Abschnitt 35 ist in einer Mulde 80 der Backe 76 angeordnet. Werden nun die beiden Backen 75, 76 aufeinander zu bewegt, das heißt die Backe 75 wird in Richtung des Pfeils 81 und die Backe 76 in Richtung des Pfeils 82 bewegt, so wird dadurch der Schenkel 29 in Richtung des Pfeils 37 bewegt. Auch der Schenkel 28 wird in Richtung des Pfeils 37 bewegt. Da jedoch der Schenkel 28 hinter dem Schenkel 29 angeordnet ist, ist der Schenkel 28 in Figur 10 nicht sehen. Durch das Aufeinanderzubewegen der beiden Backen 75, 76 werden die Abschnitte der Schenkel 28, 29 oberhalb der Schlauchschelle 2 angeordnet. Dadurch umgeben die Schenkel 28, 29 des Halteelements 4 die Schlauchschelle 2 zumindest teilweise. In Figur 10 ist jedoch nur der Schenkel 29 mit seinem Abschnitt 35 zu erkennen.

Ein Vorteil bei dieser Schellenfixierung 1 mit den Halteelementen 3 bis 5 besteht insbesondere darin, dass die Montagezeit erheblich reduziert wird, wodurch auch Kosten reduziert werden. Halteelemente und Schlauchschelle können aus unterschiedlichen Materialien bestehen. Dadurch, dass die Halteelemente 3 bis 5 durch ein Werkzeug auf dem Schlauch 69 angebracht werden und die Enden der Eingreifelemente 12 bis 17 der Halteelemente 3 bis 5 gebogen werden, sind die Halteelemente 3 bis 5 fest auf dem Schlauch 69 angeordnet. Vorteilhaft ist auch, dass die Halteelemente 3 bis 5 Schenkel 26 bis 31 sowie 20 bis 25 aufweisen, die die Schlauchschelle 2 zumindest teilweise umgeben. Dadurch ist die Schlauchschelle 2 fest in den Halteelementen 3 bis 5 angeordnet. Von Vorteil ist dabei, dass die Schenkel 26 bis 31 erst dann gebogen werden, wenn die Schlauchschelle 2 bereits auf den Halteelementen 3 bis 5 angeordnet ist. Dies trägt wesentlich dazu bei, dass die Schellenfixierung 1 fest auf dem Schlauch 69 angeordnet ist. Es versteht sich, dass anstelle von drei Halteelementen 3 bis 5 auch weniger oder mehr als drei Halteelemente für eine solche Schellenfixierung verwendet werden können. Vorzugsweise werden jedoch mehr als zwei Halteelemente für eine Schellenfixierung verwendet. Dadurch kann die Schellenfixierung 1 nicht so leicht von dem Schlauchende 72 entfernt werden. Auch ein Kippen oder Verkanten der Schlauchschelle 2 wird dadurch vermieden.

Vorteilhaft ist dabei, dass diese Schellenfixierung 1 sehr fest an dem Schlauch 69 angeordnet ist. Die Haltekräfte dieser Schellenfixierung 1 sind somit viel größer als bei üblichen Schellenfixierungen. Haltekräfte dieser Größenordnung können mit herkömmlichen Schellenfixierungen nur durch höhere Anzugsmomente erreicht werden. Höhere Anzugsmomente sind jedoch nicht erwünscht, da dadurch der Schlauch beschädigt werden kann.

Diese Schellenfixierung kann für Schläuche unterschiedlichen Durchmessers verwendet werden. Auch können für die Schellenfixierung Schlauchschellen unterschiedlicher Größe verwendet werden.

Ein weiterer Vorteil dieser frei positionierbaren Halteelemente besteht ferner darin, dass die Schellenfixierung für unterschiedliche Stutzentypen verwendet werden kann, das heißt z. B. auch für Fahrzeuge unterschiedlichen Typs eingesetzt werden kann.

## Patentansprüche

1. Schellenfixierung (1) für ein Schlauchende (72) eines Schlauchs (69) mit mindestens einem Halteelement (3 - 5, 38, 54, 83), wobei das Halteelement (3 - 5) eine Auflagefläche (32, 39, 55, 70, 84) für eine Schlauchschelle (2) sowie eine Platte (18, 19, 40, 59, 88) aufweist, wobei an der Platte mindestens ein Eingreifelement (12 - 17, 41, 42, 60, 61, 91, 92) senkrecht zu dieser Platte (18, 19, 40, 59, 88) angeordnet ist und in Richtung des Schlauchs (69) weist, **dadurch gekennzeichnet, dass** an der Auflagefläche (32, 39, 55, 70, 84) ein erstes Paar benachbarter Schenkel (20 - 25, 49, 50, 56, 57, 85, 86) angeordnet ist, das sich gegenüber einem zweiten Paar sich gegenüberliegender Schenkel (26 - 31, 43, 44, 62, 63, 89, 90) befindet, wobei die Schenkel des ersten und des zweiten Paars (20 - 25, 49, 50, 56, 57, 85, 86, 26 bis 31, 43, 44, 62, 63, 89, 90) senkrecht an der Auflagefläche (32, 39, 55, 70, 84) angeordnet sind und in Richtung der Schlauchschelle (2) weisen und wobei die Eingreifelemente (12 - 17, 41, 42, 60, 61, 91, 92) in Bezug auf eine durch die Halteelemente (3 - 5, 38, 54, 83) verlaufende Symmetrieachse S einen Winkel □ von 90° bis 235° aufweisen.

2. Schellenfixierung (1) nach Anspruch 1, **dadurch gekennzeichnet, dass** die Schenkel (20, 26; 23, 27; 22, 28; 23, 29; 85, 89; 86, 90) Führungsabschnitte (20, 26; 23, 27; 22, 28; 23, 29; 85, 89; 86, 90) bilden.

3. Schellenfixierung (1) nach Anspruch 2, **dadurch gekennzeichnet, dass** die Schlauchschelle (2) zwischen den Führungsabschnitten (20, 26; 23, 27; 22, 28; 23, 29; 85, 89; 86, 90) angeordnet ist.

4. Schellenfixierung (1) nach Anspruch 1, **dadurch gekennzeichnet, dass** die Schenkel (22, 23, 43, 44, 62, 63) Abschnitte (33, 34, 45, 46, 64, 65) aufweisen, wobei die Abschnitte (33, 34, 45, 46, 64, 65) parallel zu den Auflageflächen (32, 39, 55, 70, 84) angeordnet sind und die Schlauchschelle (2) zumindest teilweise umgeben.

5. Schellenfixierung (1) nach Anspruch 1, **dadurch gekennzeichnet, dass** die Schenkel (28, 29, 47, 48, 56, 57, 85, 86) Abschnitte (35, 36, 49, 50) aufweisen, wobei die Abschnitte (35, 36, 49, 50) in einem ersten Zustand nicht parallel zu den Auflageflächen (32, 39, 55, 70, 84) ausgerichtet sind und in einem zweiten Zustand im Wesentlichen parallel zu den Auflageflächen (32, 39, 55, 70, 84) angeordnet sind und **dadurch** die Schlauchschelle (2) zumindest teilweise umgeben.

6. Schellenfixierung (1) nach Anspruch 5, **dadurch gekennzeichnet, dass** der zwischen den Schenkeln (28, 29, 47, 48, 56, 57, 85, 86) und den Abschnitten (35, 36, 49, 50) angeordnete Winkel □Werte von □□ 90° annimmt.

7. Schellenfixierung (1) nach Anspruch 1, **dadurch gekennzeichnet, dass** die Schenkel (20, 26; 23, 27; 22, 28; 23, 29; 85, 89; 86, 90) der Führungsabschnitte (20, 26; 23, 27; 22, 28; 23, 29; 85, 89; 86, 90) einen Abstand der Länge L aufweisen, der größer ist als die Breite b der Schlauchschelle (2).

8. Schellenfixierung (1) nach Anspruch 1, **dadurch gekennzeichnet, dass** die Eingreifelemente (12 - 17, 41, 42, 60, 61, 91, 92) in das Schlauchende (72) der Schlauchs (69) eingreifen.

9. Verfahren zum Anbringen einer Schellenfixierung (1) an einem Schlauch (69), das folgende Schritte aufweist:
a) Bereitstellen des Schlauchs (69) und mindestens eines Halteelements (3 - 5);
b) Anbringen der Halteelemente (3 - 5, 38, 54, 83) auf dem Schlauch (69);
c) Biegen der Eingreifelemente (12 - 17, 41, 42, 60, 61, 91, 92);
d) Aufsetzen einer Schlauchschelle (2) auf die Halteelemente (3 - 5, 38, 54, 83);
e) mittels eines Fügewerkzeuges (74) werden die Schenkel (26 - 31, 43, 44, 62, 63, 89, 90) gebogen, so dass diese Schenkel (26 - 31, 43, 44, 62, 63, 89, 90) die Schlauchschelle (2) ebenfalls zumindest teilweise umgeben.

10. Verfahren nach Anspruch 9, **dadurch gekennzeichnet, dass** im Schritt b) das zumindest eine Halteelement (3 - 5, 38, 54, 83) mit seinen Eingreifelementen (12 - 17, 41, 42, 60, 61, 91, 92) in ein Schlauchende (72) des Schlauchs (69) eingreift.

11. Verfahren nach Anspruch 9, **dadurch gekennzeichnet**, die Eingreifelemente (12 - 17, 41, 42, 60, 61, 91, 92) mittels eines Fügewerkzeugs gebogen werden.

12. Verfahren nach Anspruch 9, **dadurch gekennzeichnet, dass** die Schlauchschelle (2) auf eine Auflagefläche (32, 39, 55, 70, 84) des entsprechenden Halteelements (3 - 5, 38, 54, 83) angeordnet wird.

13. Verfahren nach Anspruch 9, **dadurch gekennzeichnet, dass** die Schenkel (26 - 31, 47, 48, 56, 57, 85, 86) mittels eines Fügewerkzeugs (74) gebogen werden.

14. Verfahren nach Anspruch 9, **dadurch gekennzeichnet, dass** vor dem Schritt e) über eine an der Schlauchschelle (2) angeordnete Schraube (9) die Schlauchschelle (2) fest gezogen wird.
